# EUROPÄISCHE PATENTSCHRIFT

(11) **EP 3 419 900 B1**
(45) Veröffentlichungstag und Bekanntmachung des Hinweises auf die Patenterteilung: **05.05.2021**
(21) Anmeldenummer: 17707529.8
(22) Anmeldetag: 24.02.2017
(51) Int. Cl.: B65B 11/50, B65B 25/00

(54) **VERFAHREN UND MASCHINE ZUM VERPACKEN EINES LEBENSMITTELPRODUKTS**
METHOD AND DEVICE FOR PACKAGING COMESTIBLES
PROCÉDÉ ET DISPOSITIF À EMBALLER DES COMESTIBLES

(30) Priorität: 24.02.2016 DE 102016202814
(43) Veröffentlichungstag der Anmeldung: 02.01.2019
(73) Patentinhaber: Chocal Aluminiumverpackungen GmbH, 73525 Schwaebisch Gmünd (DE)
(72) Erfinder: SPECK, Thomas, 73571 Göggingen (DE); SCHERR, Joachim, 71549 Auenwald (DE); BANTLEON, Konrad, 89547 Gerstetten (DE); SDAHL, Michael, 73614 Schorndorf (DE)
(74) Vertreter: Grünecker Patent- und Rechtsanwälte PartG mbB
(86) Internationale Anmeldenummer: PCT/EP2017/054333
(87) Internationale Veröffentlichungsnummer: WO 2017/144664

(56) Entgegenhaltungen:
- EP-A1- 2 366 631
- AT-B- 221 906
- CH-A- 408 756
- GB-A- 952 925
- NL-A- 279 067
- US-A- 5 623 816

## Beschreibung

Die vorliegende Erfindung betrifft ein Verfahren zum Verpacken eines Lebensmittelprodukts, insbesondere einer Schokohohlfigur, gemäß des unabhängigen Verfahrensanspruchs. Die Erfindung betrifft weiterhin eine Maschine zum Verpacken eines Lebensmittelprodukts, insbesondere einer Schokohohlfigur, gemäß des unabhängigen Vorrichtungsanspruchs.

Aus der DE 1 784 647 sind ein gattungsgemäßes Verfahren und eine entsprechende Vorrichtung bekannt. Hierbei werden Folienstücke auf Formmulden eines rotierenden Formtellers positioniert, anschließend von einem Formstempel in die Formmulde gedrückt und dabei zu einer Halbschale geformt. In einem nächsten Schritt kann die in der Formmulde befindliche Halbschale mit einem Lebensmittel bestückt werden und weiter in der Formmulde zu einer Fügeposition befördert werden. In dieser Fügeposition wird die mit dem Lebensmittel bestücke Halbschale mit einer zweiten Halbschale zusammengefügt, um das Lebensmittel zu verpacken. Beim Zusammenfügen werden die beiden Halbschalen in ihren Flanschregionen aufeinander gepresst und hierbei gleichzeitig unerwünschte Flanschüberstände abgeschnitten. Hierbei kann es zu unerwünschten Eintrag von Folienschnittresten in das verpackte Lebensmittel kommer Die AT221906B beschreibt Schnitt- und Prägewerkzeuge zum Vorformen und Beschneiden, von Gieß- und Hüllformen, wobei die vorgeformten und beschnittenen Halbschalen anschließend in mehrteilige Stützformen aus Blech od. dgL eingelegt werden und dann eine Dosiervorrichtung durchlaufen mittels welcher beispielsweise eine genau bemessene Menge flüssiger Schokolade in jede der beiden Formhälften eingefüllt wird. Die GB952925A beschreibt eine ähnliche Vorrichtung, bei der flüssige Schokolade nur in eine der beiden Formhälften eingefüllt wird.

Der vorliegenden Erfindung liegt die Aufgabe zugrunde das bekannte Verfahren und die bekannte Vorrichtung derart zu verbessern, dass Lebensmittelprodukte, und insbesondere Schokoladenhohlfiguren, zuverlässig und zeiteffizient in Folienhalbschalen verpackt werden können, wobei das Risiko eines unerwünschten Folienschnittresteintrags zumindest reduziert ist.

Die oben genannte Aufgabe wird mit den Merkmalen des unabhängigen Verfahrensanspruchs gelöst.

Bei dem erfindungsgemäßen Verfahren zum Verpacken eines Lebensmittelprodukts, insbesondere einer Schokohohlfigur, werden jeweils eine von zwei Folienhalbschalen mit einem Lebensmittelprodukt bestückt und hierbei ist jede Folienhalbschale mit ihrer jeweiligen Innenkontur an die entsprechende Außenkontur des Lebensmittelproduktes angepasst. Eine mit dem Lebensmittelprodukt bestückte Folienhalbschale wird mit einer entsprechend anderen Folienhalbschale zusammengefügt, so dass die beiden zusammengefügten Folienhalbschalen das Lebensmittelprodukt einhausen, wobei die Folienhalbschalen vor dem Bestücken beschnitten werden.

Durch ein Vornehmen des Beschneidens der Folienhalbschalen vor dem Bestücken mit einem Lebensmittelprodukt ist es ermöglicht, das Beschneiden und das Bestücken in räumlich getrennten Bereichen und/oder getrennten Verfahrensschritten durchzuführen. Das Schnittabfall risiko in den eingehausten Lebensmittelprodukten kann hierdurch deutlich reduziert bzw. ausgeschlossen werden.

In einer vorteilhaften Ausführungsform kann eine Folienhalbschale durch eine Senkbewegung einer Stempelvorrichtung geformt und zudem von dieser Stempelvorrichtung beschnitten werden.

Ein Formen und Beschneiden der Folienhalbschale in einer Stempelvorrichtung erlaubt ein platz- und zeiteffizientes Formen und Beschneiden von einer oder von gleichzeitig mehreren Folienhalbschalen in einem definierten Bereich. Weiterhin ist kein Transfer zwischen einem Bereich des Formens der Folienhalbschale und des Beschneidens derselbigen notwendig, was die Präzision beim Beschneiden der Folienhalbschalen erhöht, da bei Transfervorgängen die leichten Folienhalbschalen in ungewünschter Weise in ihrer Position vor dem Beschneiden verändert werden könnten. Ein Formen der Folienhalbschale durch eine Senkbewegung einer Stempelvorrichtung und ein Beschneiden der Folienhalbschale durch die Stempelvorrichtung verbindet das Formen und Schneiden vorteilhaft in einem Bearbeitungsgang. Dies erhöht auch die Schnittpräzision, da sich kurz nach dem Formen die Folienhalbschale noch in einer sehr definierten Position befindet.

Weiterhin kann in einer Ausführungsform eine Folienhalbschale von der Stempelvorrichtung beschnitten werden, während sie von der Stempelvorrichtung fixiert wird.

Ein Fixieren der Folienhalbschale durch die Stempelvorrichtung, welche auch die Folienhalbschale beschneidet, verbessert weiter die Schnittpräzision beim Beschneiden, da ein unerwünschtes Verrutschen der Folienhalbschale während des Beschneidvorgangs unterbunden wird. Das Fixieren der Folienhalbschale durch die Stempelvorrichtung stellt hierbei eine besonders effiziente und kompakte Lösung dar.

Günstigerweise kann eine Folienhalbschale in einem Bearbeitungsgang geformt, fixiert und beschnitten werden.

Dies erlaubt ein besonders effizientes Verfahren bei gleichzeitig hoher Schnittpräzision.

In einer weiteren Ausführungsform kann vor dem Zusammenfügen der geschnittenen Folienhalbschalen jeweils eine unbestückte Folienhalbschale auf eine bestückte Folienhalbschale gelegt, insbesondere geklappt, werden, so dass die beiden Folienhalbschalen das Lebensmittelprodukt umschließen.

Ein Aufeinanderlegen der geschnittenen Folienhalbschalen vor dem Zusammenfügen erlaubt ein Überprüfen und, falls notwendig, ein Korrigieren der Lagen der beiden Folienhalbschalen zueinander, was die Qualität der zusammengefügten Folienhalbschalen und deren Optik verbessert. Ein optionales Aufeinanderlegen durch ein Klappen der unbestückten Folienhalbschale auf eine bestückte Folienhalbschale stellt hierbei eine überraschend zuverlässige und schnelle Art des Zusammenbringens der beiden Folienhalbschalen dar. Überraschenderweise hat sich gezeigt, dass insbesondere bei einem Klappverfahren in Verbindung mit Lebensmittelprodukten, welche im bestückten Zustand aus der einen Folienhalbschale hervorragen, die Lebensmittelprodukte das passende Aufeinanderlegen der beiden Folienhalbschalen beim Klappvorgang vorteilhaft unterstützen. Da die Lebensmittelprodukte, wie beispielsweise bei Schokohohlfiguren, in ihrer Außenkontur an die Innenkontur der jeweiligen Folienhalbschalen angepasst sind, zentriert das Lebensmittelprodukt die unbestückte Folienhalbschale in besonders vorteilhafter Weise, so dass diese sehr passgenau auf der entsprechend anderen Folienhalbschale zum Liegen kommt.

Vorteilhafterweise können die Folienhalbschalen in einem Beschneidebereich beschnitten und in einem davon beabstandeten Lebensmittelverarbeitungsbereich bestückt und zusammengefügt werden.

Eine räumliche Trennung des Beschneidens vom Bestücken und Zusammenfügen vermindert zuverlässig das Risiko von Schnittresteintrag in das verpackte Lebensmittelprodukt.

Bei einer weiteren Ausführungsform können geschnittene Folienhalbschalen bei einer Arbeitsposition in den Lebensmittelverarbeitungsbereich überführt werden, von der auch zusammengefügte Folienhalbschalen aus dem Lebensmittelverarbeitungsbereich abgeführt werden.

Das Einbringen von geschnittenen Folienhalbschalen und das Abführen von zusammengefügten Folienhalbschalen in derselben Arbeitsposition erlaubt eine kompakte Gestaltung des Lebensmittelverarbeitungsbereichs, da eine Arbeitsposition für zwei unterschiedliche Arbeitsabläufe genutzt werden kann. Dies erlaubt weiterhin das Nutzen von gemeinsamen Vorrichtungen zum Ein- und Ausbringen der geschnittenen Folienhalbschalen bzw. der zusammengefügten Folienhalbschalen in bzw. aus dem Lebensmittelverarbeitungsbereich.

In weiteren möglichen Ausführungsformen:
kann eine Folienhalbschale während des Beschneidens in einer Matrize fixiert werden, und/oder kann eine Folienhalbschale in einer halbschalenförmigen Matrize geformt werden und anschließend in dieser Matrize beschnitten werden, und/oder
können Folienhalbschalen beim Zusammenfügen stoffschlüssig und/oder formschlüssig miteinander verbunden werden, und/oder
können Folienhalbschalen auf einem stationsweise rotierenden Takttisch bestückt und zusammengefügt werden, und/oder
können die Folienhalbschalen vollautomatisiert geformt, geschnitten, mit Lebensmittelprodukten bestückt und zusammengefügt werden, und/oder
kann ein Folienband vollautomatisch von einem Foliencoil abgezogen, zu Folienstücken vorgeschnitten, die Folienstücke in einem Bearbeitungsgang zu Folienhalbschalen geformt und beschnitten, die Folienhalbschalen mit Lebensmittelprodukten bestückt, aufeinandergelegt und zusammengefügt werden,
kann die mit einem Lebensmittelprodukt bestückte Folienhalbschale mit der entsprechend anderen Folienhalbschale durch Siegeln und/oder Bördeln zusammengefügt werden.

Die anfangs genannte Aufgabe wird weiterhin durch eine Maschine zum Verpacken eines Lebensmittelprodukts, insbesondere einer Schokohohlfigur, gemäß des unabhängigen Vorrichtungsanspruchs gelöst.

Besagte Maschine weist hierbei eine Beschneideeinheit zum Beschneiden von unbestückten Folienhalbschalen auf sowie eine Lebensmittelverarbeitungseinheit, welche eine Bestückungsvorrichtung zum Bestücken von Folienhalbschalen mit Lebensmittelprodukten und eine Fügevorrichtung zum Zusammenfügen von mit Lebensmittelprodukten bestückten Folienhalbschalen und unbestückten Folienhalbschalen, so dass die beiden zusammengefügten Folienhalbschalen ein Lebensmittelprodukt einhausen. Hierbei ist erfindungsgemäß die Beschneideeinheit außerhalb der Lebensmittelverarbeitungseinheit angeordnet.

Dies erlaubt ein räumlich getrenntes Beschneiden separiert vom Lebensmittelbereich und ermöglicht so eine Reduzierung des Risikos des Verpackens von Schnittabfällen zusammen mit dem Lebensmittelprodukt.

Vorteilhafterweise kann die Maschine eine Formeinheit zum Formen von Folienstücken in Folienhalbschalen aufweisen und die Formeinheit und die Beschneideeinheit können in ein und derselben Arbeitsstation angeordnet sein.

Dies ermöglicht ein raum- und zeiteffizientes Formen und Beschneiden von Folienhalbschalen in einer Arbeitsstation.

In einer weiteren vorteilhaften Ausführungsform können die Formeinheit und die Beschneideeinheit in einer Stempelvorrichtung angeordnet sein.

Dies ermöglicht ein besonders raum- und zeiteffizientes Formen und Beschneiden der Folienhalbschalen in einer Stempelvorrichtung.

Vorteihafterweise kann in einer Ausführungsform die Formeinheit eine formgebende Struktur zum drückenden Formen einer Folienhalbschale aufweisen, und die Beschneideeinheit eine Schnittvorrichtung aufweisen, welche in der Arbeitsstation und/oder in der Stempelvorrichtung zur formgebenden Struktur relativ beweglich angeordnet ist.

Dies ermöglicht eine unabhängige Bewegung für das Formen und das Beschneiden der Folienhalbschale in der Arbeitsstation und/oder in der Stempelvorrichtung.

In einer Variante der Erfindung kann die formgebende Struktur zur Schnittvorrichtung derart relativ beweglich angeordnet sein, dass ein drückendes Formen einer Folienhalbschale eine Relativbewegung der Schnittvorrichtung zur formgebenden Struktur in Richtung der Folienhalbschale bewirkt und/oder zulässt.

Dies stellt ein aufeinander abgestimmtes Formen und Beschneiden sicher.

In einer vorteilhaften Ausführungsform kann die formgebende Struktur in der Stempelvorrichtung federnd angeordnet sein und zur Schnittvorrichtung in Drückrichtung vorauseilend angeordnet sein, so dass bei einem drückenden Formen einer Folienhalbschale ein Einfedern der formgebenden Struktur die Relativbewegung der Schnittvorrichtung in Richtung der Folienhalbschale bewirkt und/oder zulässt.

Dies ermöglicht ein zuverlässiges und präzises Beschneiden der Folienhalbschale durch die Stempelvorrichtung. Weiterhin kann hierdurch die Folienhalbschale von der formgebenden Struktur fixiert werden, während die Schnittvorrichtung die Folienhalbschale beschneidet.

In einer weiteren Variante der Erfindung kann die Lebensmittelverarbeitungseinheit Haltevorrichtungen zum Halten von Folienhalbschalen aufweisen, welche im Betrieb der Maschine diskontinuierlich, vorzugsweise auf einem Takttisch, durch die Lebensmittelverarbeitungseinheit bewegt werden. Hierbei können jeweils zwei Haltevorrichtungen zueinander relativ beweglich angeordnet sein und im Betrieb in einem ersten Zustand Folienhalbschalen halten und in einem zweiten Zustand eine Haltevorrichtung ihre Folienhalbschalen auf die Folienhalbschalen der entsprechend anderen Haltevorrichtung gelegt haben, so dass die beiden Folienhalbschalen das Lebensmittelprodukt umschließen.

Durch die Haltevorrichtungen wird ein passendes Aufeinanderlegen der beiden Folienhalbschalen ermöglicht. Zudem wird durch den zweiten Zustand ein Überwachen der Passgenauigkeit und der Lage der Folienhalbschalen zueinander vor dem Zusammenfügen ermöglicht und erleichtert.

In einer weiteren Ausführungsform können jeweils zwei Haltevorrichtungen über einen Klappmechanismus miteinander verbunden sein, und die Lebensmittelverarbeitungseinheit weiterhin eine Klappeinheit aufweisen, welche im Betrieb den Klappmechanismus betätigt.

Dies ermöglicht ein überraschend zuverlässiges und präzises Realisieren des Aufeinanderlegens der Folienhalbschalen.

Zudem kann in einer weiteren Variante der Erfindung die Maschine eine Transfereinheit aufweisen, welche dazu eingerichtet ist, im Betrieb geschnittene Folienhalbschalen aufzunehmen und in der Lebensmittelverarbeitungseinheit abzulegen und zeitlich überschneidend, vorzugsweise gleichzeitig, zusammengefügte Folienhalbschalen aus der Lebensmittelverarbeitungseinheit aufzunehmen und abzuführen.

Dies ermöglicht ein effizientes und zuverlässiges Einbringen von geschnittenen Folienhalbschalen in die Lebensmittelverarbeitungseinheit und ebenso ein effizientes und zuverlässiges Abführen von zusammengefügten Folienhalbschalen aus der Lebensmittelverarbeitungseinheit mit nur einer Transfereinheit. Zudem kann die Anzahl der Folienhalbschalen in der Lebensmittelverarbeitungseinheit leicht kontrolliert werden.

Vorteilhafterweise kann in einer Ausführungsform die Transfereinheit zwei bewegliche und zueinander beabstandete, insbesondere zueinander konstant beabstandete, selektive Greifvorrichtungen aufweisen, wobei die eine Greifvorrichtung Folienhalbschalen selektiv aufnehmen und abgeben kann und die andere Greifvorrichtung zusammengefügte Folienhalbschalen selektiv aufnehmen und abgeben kann.

Dies erlaubt es, dass eine Folienhalbschalen-Einführposition in die Lebensmittelverarbeitungseinheit und eine Ausführposition von zusammengefügten Folienhalbschalen aus der Lebensmittelverarbeitungseinheit ein und dieselbe sein kann und spart hierdurch eine Arbeitsstation.

Im Folgenden wird eine mögliche Ausführungsform der Erfindung, welche zumindest Teile der zuvor genannten Ausführungsformen mit einander kombiniert, anhand der folgenden Zeichnungen näher erläutert. Dabei zeigen:
- Figur 1: eine schematische Zeichnung einer erfindungsgemäßen Maschine in einer Ansicht von oben,
- Figur 2: eine schematische, seitliche Schnittansicht durch einen Teil der Maschine entlang der Linie A-A in Figur 1, mit gezeigten Teilen einer Stempelvorrichtung mit einer darunterliegenden Matritzeneinheit,
- Figur 3: eine schematische Seitenansicht eines Teils der Maschine, zeigend eine Transfereinheit, eine Wartevorrichtung, Teile einer Lebensmittelverarbeitungseinheit, und eine Produktabführvorrichtung, wobei eine Greifvorrichtungen der Transfereinheit über der Wartevorrichtung und eine andere Greifvorrichtung der Transfereinheit über der Lebensmittelverarbeitungseinheit positioniert ist,
- Figur 4: die Ansicht aus Fig. 3 in einem weiteren Zustand der Maschine, wobei nun die eine Greifvorrichtungen über der Lebensmittelverarbeitungseinheit positioniert ist und die andere Greifvorrichtung über der Produktabführvorrichtung positioniert ist,
- Figur 5: eine schematischen Seitenansicht eines Teils der Maschine, mit eine Bestückungsvorrichtung zum Bestücken von Folienhalbschalen mit Lebensmittelprodukten in einem Zustand, in welchem eine Lebensmittelaufnahmevorrichtung der Bestückungsvorrichtung oberhalb von zu verpackenden Lebensmittelprodukten positioniert ist,
- Figur 6: die Ansicht aus Fig. 5 in einem weiteren Zustand, in welchem die Lebensmittelaufnahmevorrichtung zwei Lebensmittelprodukte aufgenommen und sich in einer Position oberhalb einer auf einem Teil eines Takttisches befindlichen Haltevorrichtung für Folienhalbschalen befindet,
- Figur 7: eine schematische Ansicht eines Teils der Maschine, wobei eine Klappeinheit in Kontakt mit einem Haltevorrichtungspaar ist,
- Figur 8: eine schematische Seitenansicht eines Haltevorrichtungspaars, in einem Zustand in Kontakt mit der Klappeinheit, wobei unbestückte Folienhalbschalen einer Haltevorrichtung gerade auf bestückte Folienhalbschalen der anderen Haltevorrichtung geklappt werden,
- Figur 9: die Ansicht aus Figur 8 in einem weiteren Zustand, in welchem die unbestückten Folienhalbschalen auf die bestückten Folienhalbschalen geklappt wurden,
- Figur 10: eine schematische Querschnittsansicht einer Fügevorrichtung zum Zusammenfügen von mit Lebensmittelprodukten bestückten Folienhalbschalen entlang der Linie B-B aus Figur 1,
- Figur 11: eine schematische Querschnittsansicht zweier zusammengefügter Folienhalbschalen, welche ein Lebensmittelprodukt, hier in Form einer symmetrischen eierförmigen Schokohohlfigur, einhausen,
- Figur 12: eine schematische Querschnittsansicht einer weiteren möglichen Form einer asymmetrischen Schokohohlfigur eingehaust von zwei zusammengefügten Folienhalbschalen.

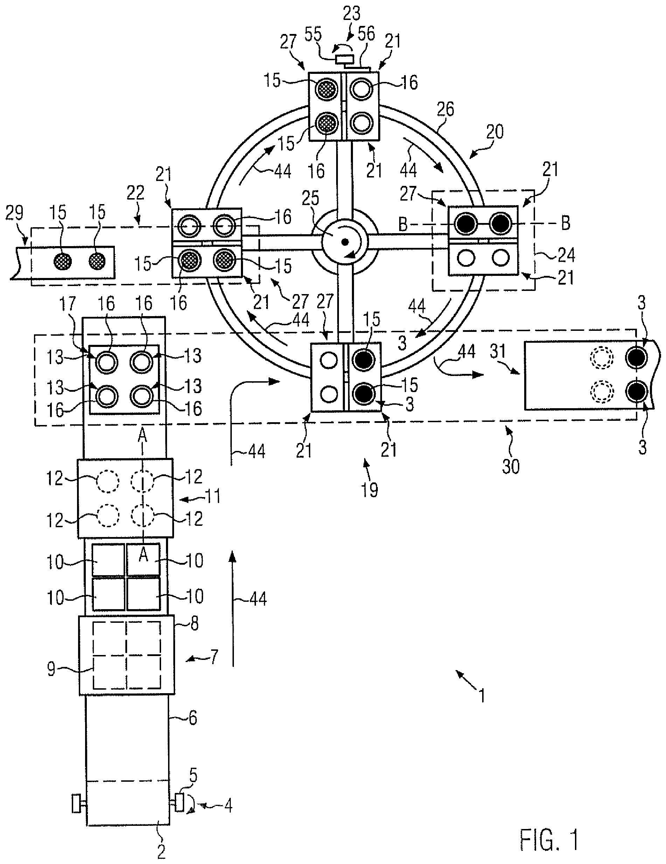

Wie in Fig. 1 gezeigt, weist die Maschine 1 zu Beginn des Verarbeitungsweges vom Foliencoil 2 zum zusammengefügten Produkt 3 eine Folienbereitstellungseinheit 4 auf. In der Folienbereitstellungseinheit 4 ist ein Foliencoil 2 drehbar aufgehängt und besitzt einen gesteuerten Antrieb 5. Der Antrieb 5 kann das Foliencoil 2 falls notwendig diskontinuierlich antreiben und ein Abziehen eines Folienbandes 6 vom Foliencoil 2 unterstützen. Die Folie des Foliencoils 2 ist hierbei auf einer Seite mit einer siegelbaren Schicht versehen, welche bei Erhitzen aufschmilzt und bis zum abkühlen adhäsiv ist. Bevorzugte Stärken/Dicken der Folie sind im Bereich von 5 µm bis 100 µm, insbesondere in einem Bereich von 10 µm bis 50 µm, besonders in einem Bereich von 15 µm bis 40 µm.

Das eingesetzte Folienmaterial ist vorzugsweise im kalten Zustand plastisch verformbar. Das Folienmaterial kann beispielsweise eine Metallfolie sein, insbesondere eine Aluminiumfolie.

Eine nicht dargestellte, in Richtung des Verarbeitungsweges 44 der Maschine 1 hin und her bewegbare Foliengreif-Schlittenkonstruktion kann das Folienband 6 vom Foliencoil 2 abziehen und diskontinuierlich in eine Vorschneidestation 7 befördern.

Die Vorschneidestation 7 ist in Richtung des Verarbeitungsweges 44 der Folienbereitstellungseinheit 4 nachfolgend als nächste Bearbeitungseinheit angeordnet.

Die Vorschneidestation 7 weist eine Vorschneidstanze 8 mit einem Vorschneidmesser 9 auf. In der Vorschneidstation 7 wird das Folienband 6 durch das sich gesteuert hebende und senkende Vorschneidmesser 9 pro Arbeitstakt in vier Folienstücke 10 geschnitten.

Die Folienstücke 10 werden anschließend durch einen nicht dargestellten, in der Horizontalen in Richtung des Verarbeitungsweges hin und her bewegbaren Transferschlitten mit Underdruck- Foliengreifern, unter eine Stempelvorrichtung 11 bewegt und jeweils auf halbschalenförmige Formmatrizen 12 unterhalb der Stempelvorrichtung 11 abgelegt. Die Stempelvorrichtung 11 ist in Richtung des Verarbeitungsweges 44 der Vorschneidestation 7 nachgeordnet als nächste Bearbeitungseinheit angeordnet. Zu Zwecken der Veranschaulichung sind in Fig. 1 Folienstücke 10 bei ihrer Beförderung von der Vorschneidestation 7 in die Stempelvorrichtung 11 zu sehen.

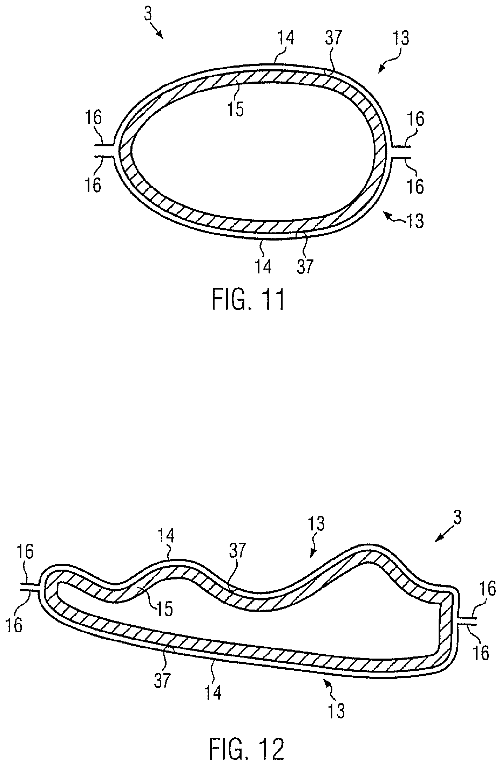

Die Stempelvorrichtung 11 formt die Folienstücke 10 nun zu Folienhalbschalen 13, fixiert und beschneidet sie weiterhin in einem Bearbeitungsgang bzw. einem Arbeitstakt. Die Formmatrizen 12 sind in Figur 1 in gestrichelten Linien angedeutet. Jede Folienhalbschale 13 weist nach dem Formen und Beschneiden einen halbschalenförmigen Körper 14 auf, welcher in in seiner Gestalt an die entsprechende Kontur des zu verpackenden Lebensmittelprodukts 15 angepasst ist. Weiterhin weist jede Folienhalbschale 13 einen sich an den halbschalenförmigen Körper 14 anschließenden, sich vom halbschalenförmigen Körper 14 in einer Ebene umlaufend ersteckenden, ringartigen Folienflansch 16 auf, siehe auch Fig. 11 und 12.

Anschließend werden die geformten und final beschnittenen Folienhalbschalen 13 aus den Formmatrizen 12 mittels nicht dargestellter 3D-Formsauger, welche auf einer ebenfalls nicht dargestellten beweglichen Schlittenvorrichtung aufgehängt sind, herausgenommen und über eine nicht dargestellte Schlittenvorrichtung zu einer Wartevorrichtung 17 bewegt und auf dieser abgelegt.

Die Wartevorrichtung 17 ist in Richtung des Verarbeitungsweges 44 der Stempelvorrichtung 11 direkt nachgestellt angeordnet und weist der Anzahl der Folienhalbschalen 13 entsprechende Folienhalbschalenaufnahmen 18 auf.

Fig. 1 zeigt weiterhin eine Lebensmittelverarbeitungseinheit 19, mit einem Takttisch 20 auf dem Folienhaltevorrichtungen 21 angeordnet sind. Die Lebensmittelverarbeitungseinheit 19 weist weiterhin eine Bestückungsvorrichtung 22, eine Klappeinheit 23 und eine Fügevorrichtung 24 auf. Die Lebensmittelverarbeitungseinheit 19 realisiert hierbei einen Lebensmittelverarbeitungsbereich.

Der Takttisch 20 rotiert im Betrieb diskontinuierlich im Uhrzeigersinn und weist in dieser Ausführungsform vier Paare von jeweils zwei der aufeinander klappbaren Folienhaltevorrichtungen 21 (nachfolgend Haltevorrichtungen genannt) auf. Jeweils zwei Paare 27 von Haltevorrichtungen 21 liegen sich einander kreuzförmig gegenüber.

Der Takttisch 20 ist im Zentrum mit einem Antrieb 25 versehen, welcher den Tisch 20 im Uhrzeigersinn diskontinuierlich und gesteuert bewegt. Alle vier Paare der Haltevorrichtungen 21 befinden sich in zum jeweilig benachbarten Haltevorrichtungspaar gleichen Abständen entlang einer kreisförmigen Unterbaustruktur 26 des Takttisches 20. Die Unterbaustruktur 26 ist wiederrum mit dem Antrieb 25 gekoppelt und rotiert mit den Haltevorrichtungspaaren. Der Takttisch rotiert das jeweilige Haltevorrichtungspaar 27 um jeweils 45° zu einer anschließenden Bearbeitungsposition. Die Bearbeitungspositionen werden im Folgenden als Sechs-Uhr, Neun-Uhr, Zwölf-Uhr und Drei-Uhr Positionen betitelt.

Jede Haltevorrichtung 21 kann durch entsprechende Aufnahmen 28 zwei Folienhalbschalen 13 halten.

In einer Sechs-Uhr Arbeitsposition des Takttisches 20 ist eine Haltevorrichtungspaar 27 gezeigt, wobei nur die im Uhrzeigersinn nachgestellte Haltevorrichtung 21 Folienhalbschalen 13 aufweist, hier jeweils zwei zusammengefügte Folienhalbschalen, welche ein Lebensmittelprodukt 15 einhausen. Die Sechs-Uhr Position stellt die zur Wartevorrichtung 17 nächste Bearbeitungseinheit dar.

In einer Neun-Uhr-Position des Takttisches 20 ist, durch gestrichelte Linien angedeutet, die Bestückungsvorrichtung 22 gezeigt. Wie zu sehen ist, überspannt die Bestückungsvorrichtung 22 eine sich in der Neun-Uhr Position befindliche Haltevorrichtung 21, in welche Lebensmittelprodukte 15 eingebracht werden sollen. Weiterhin überspannt die Bestückungsvorrichtung Teile einer Lebensmittelproduktzuführvorrichtung 29. Die überspannte Haltevorrichtung 21 hält hier zwei Folienhalbschalen 13, jeweils bestückt mit einem Lebensmittelprodukt 15. Die Neun-Uhr Position des Takttisches 20 zusammen mit der Bestückungsvorrichtung 22 stellt hier die zur Sechs-Uhr Position nächste Bearbeitungseinheit dar.

In einer Zwölf-Uhr-Position befindet sich ein Haltevorrichtungspaar 27 auf Höhe der Klappeinheit 23. Die gezeigte im Uhrzeigersinn nachgestellte Haltevorrichtung 21 enthält zwei Folienhalbschalen 13, welche beide jeweils mit einem Lebensmittelprodukt 15 bestückt sind. Die gegenüberliegende andere Haltevorrichtung 21 enthält entsprechend zwei unbestückte Folienhalbschalen 13. Die Klappeinheit 23 stellt die hier zur Bestückungseinheit 22 nächste Bearbeitungseinheit dar.

In der Drei-Uhr-Position des Takttisches 20 ist die der Übersichtlichkeit halber nur mit Strichlinien angedeutete Fügevorrichtung 24 gezeigt. In dieser werden die an ihren Flanschen 16 aufeinanderliegenden Folienhalbschalen 13 aufeinander gepresst und gesiegelt. Die Fügevorrichtung 24 stellt die hier zur Klappeinheit 23 nächste Bearbeitungseinheit dar.

Optional kann in der Fügevorrichtung 24 auch ein Siegeln und/oder Bördeln und/oder Anlegen der Flansche 13 stattfinden. In weiteren, nicht dargestellten Ausführungsformen können die zuvor genannten Bearbeitungsschritte anstatt in einer Fügevorrichtung in mehreren Vorrichtungen und somit in mehreren aufeinanderfolgenden Bearbeitungspositionen erfolgen. Hierbei können dann beispielsweise bis zu sechs Bearbeitungspositionen für den Takttisch 20 vorliegen.

Eine mit gestrichelten Linien in Figur 1 angedeutet Transfereinheit 30 überspannt die Wartevorrichtung 17, die Sechs-Uhr Position des Takttisches 20 und einen Teil einer Fertigproduktabführvorrichtung 31.

Die Fertigproduktabführvorrichtung 31 führt mit Hilfe der Transfereinheit 30 die zusammengefügten und ein Lebensmittelprodukt einhausenden Folienhalbschalen 13 aus der Sechs-Uhr Position des Takttisches 20 und somit aus der Lebensmittelverarbeitungseinheit 19 ab und überführt sie beispielsweise in einen nicht dargestellten Lagerbereich.

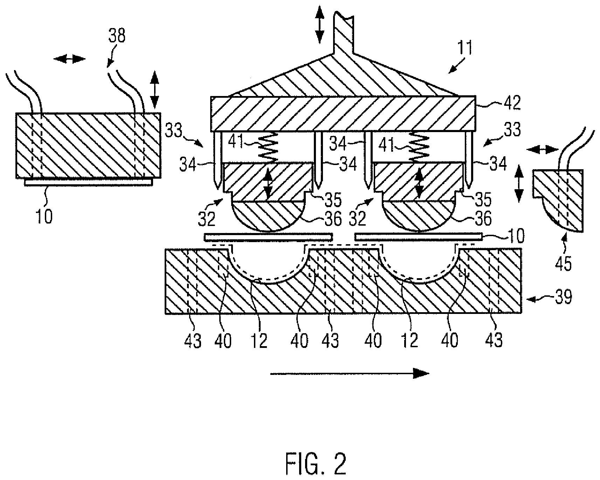

Fig. 2 zeigt die Stempelvorrichtung 11, hier mit zwei gleichen nebeneinander angeordneten Formeinheiten 32 zum Formen von Folienhalbschalen 13 und entsprechend zwei zugehörigen Beschneideeinheiten 33 zum Beschneiden geformter Folienhalbschalen 13.

Im Folgenden wird nur eine der beiden Kombinationen aus Formeinheit 32 und Beschneideeinheit 33 näher beschrieben. Die Beschneideeinheit 33 weist eine Schnittvorrichtung 34 mit einer produktabhängigen Kontur, hier in Form eines ringförmig umlaufenden Messers, auf. Die Schnittvorrichtung 34 ist somit hier in ihrer Form zylindrisch und mit ihrem schneidenden Ende nach unten den Formmatrizen 12 entgegengerichtet angeordnet.

Die Formeinheit 32 wird innerhalb der zylinderförmigen Schnittvorrichtung 34 durch diese geführt. Die Formeinheit 32 weist an ihrem einem Ende einen Gleitabschnitt 35 und an ihrem anderen, unteren Ende eine der Formmatrize 12 gegenüberliegende, formgebende Struktur 36 auf.

Die formgebende Struktur 36 entspricht der Innenkontur der zu formenden Folienhalbschale 13. Das gezeigte Folienstück 10 ist von dem einen Vakuumgreifer-Schlitten 38 zwischen der formgebenden Struktur 36 und der Formmatrize 12 positioniert worden. In dem dargestellten Zustand ist das Folienstück 10 noch ungeformt und verdeckt die halbschalenförmige Formmatrize 12. Die Formmatrize 12 ist durch eine Aussparung in der Matrizeneinheit 39 gebildet. Konzentrisch umlaufend zur Formmatrize 12 ist eine Schnittaussparung 40 in der Matrizeneinheit 39 gebildet und hier gestrichelt angedeutet.

Der Gleitabschnitt 35 der Formeinheit 32 ist in der Schnittvorrichtung 34 gleitend geführt und über ein elastisches Element 41, beispielsweise eine Feder, mit einem Oberbau 42 der beweglichen Stempelvorrichtung 11 elastisch federnd verbunden. Die Schnittvorrichtung 34 ist starr mit dem Oberbau 42 verbunden.

Die Matrizeneinheit 39 weist weiterhin Absaugvorrichtungen 43 auf, welche hier in gestrichelten Linien angedeutet sind. Diese Absaugvorrichtungen 43 saugen anfallende Folienschnittreste zuverlässig durch Unterdruck ab. In dem in der Fig. 2 gezeigten Zustand, bewegt sich die Stempelvorrichtung 11 gerade in Richtung der Formmatrizen 12, um aus den Folienstücken 10 Folienhalbschalen 13 zu formen.

Die Richtung des Verarbeitungsweges der Maschine ist hier durch einen Pfeil 44 angedeutet. In Richtung des Verarbeitungsweges 44 sind 3D-Formsauger 45 angedeutet. Diese Formsauger 45 sind in der Horizontalen sowie in der Vertikalen steuerbar beweglich und können die geformten Folienhalbschalen, welche gestrichelt in den Formmatrizen 12 angedeutet sind, durch den Einsatz von Vakuum aus den Formmatrizen 12 aufnehmen und zur Wartevorrichtung 17 bewegen und abschließend dort ablegen.

In Richtung des Verarbeitungsweges 44 vorgeschaltet angeordnet ist ein Teil des Schlittens 38, welcher die vorgeschnittenen Folienteilstücke 10 mittels Unterdruck von der Vorschneidestation 7 zur Stempelvorrichtung 11 befördern kann. Der Schlitten 38 ist ebenfalls in der Vertikalen sowie in der Horizontalen steuerbar beweglich.

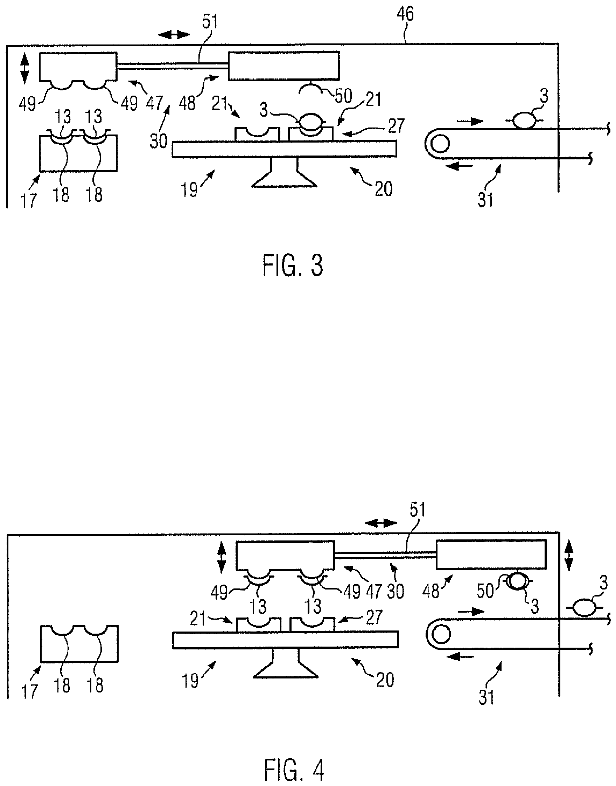

Fig. 3 zeigt die bewegliche und steuerbare Transfereinheit 30, welche entlang eines die Wartevorrichtung 17, die Sechs-Uhr Position des Takttisches 20 und Teile der Produktabführvorrichtung 31 überspannenden Schienensystems 46 in der Horizontalen sowie in der Vertikalen beweglich angeordnet ist. Die Transfereinheit 30 weist hierbei an ihren beiden gegenüberliegenden Enden jeweils eine selektive Greifvorrichtung 47, 48 auf.

Die eine Greifvorrichtung 47 ist über konvexe 3D-Formsauger 49 dazu eingerichtet, geformte Folienhalbschalen 13 aus der Wartevorrichtung 17 aufzunehmen und in der Sechs-Uhr Position des Takttisches 20 abzulegen. Die andere Greifvorrichtung 48 ist durch konkave 3D-Formsauger 50 dazu eingerichtet, zusammengefügte Folienhalbschalen 3, welche ein Lebensmittelprodukt 15 einhausen, von der Sechs-Uhr Position des Takttisches 20 aufzunehmen und in der Produktabführvorrichtung 31 abzulegen. Die beiden Greifvorrichtungen 47, 48 sind hier über eine starre Schlittenstruktur 51 miteinander fest verbunden. In weiteren, nicht dargestellten Ausführungsformen können die Greifvorrichtungen 47, 48 frei zueinander beweglich und in ihren Bewegungen separat steuerbar sein. Jede Greifvorrichtung 47, 48 für sich weist weiterhin einen nicht dargestellten beweglichen Teil auf, welcher es den kovexen bzw. konkaven Saugvorrichtungen 49, 50 erlaubt, sich in der Vertikalen zu bewegen.

Fig. 4 zeigt wie die konvexen Saugvorrichtungen 49 Folienhalbschalen 13 über die Sechs-Uhr Position des Takttisches 20 bewegt haben und gleichzeitig entsprechend die konkaven Saugvorrichtungen 50 fertig zusammengefügte Folienhalbschalen, also das Endprodukt 3, aufgenommen und über die Produktabführvorrichtung 31 bewegt haben.

Hierbei weist die eine Greifvorrichtung 47 insgesamt vier konvexe Saugvorrichtungen 49 auf und die andere Greifvorrichtung 48 insgesamt zwei konkave Saugvorrichtungen 50 auf. Aufgrund der seitlichen Perspektive sind nur zwei konvexe und eine konkave Saugvorrichtung zu sehen. Die Produktabführvorrichtung 31 ist hier ein Förderband.

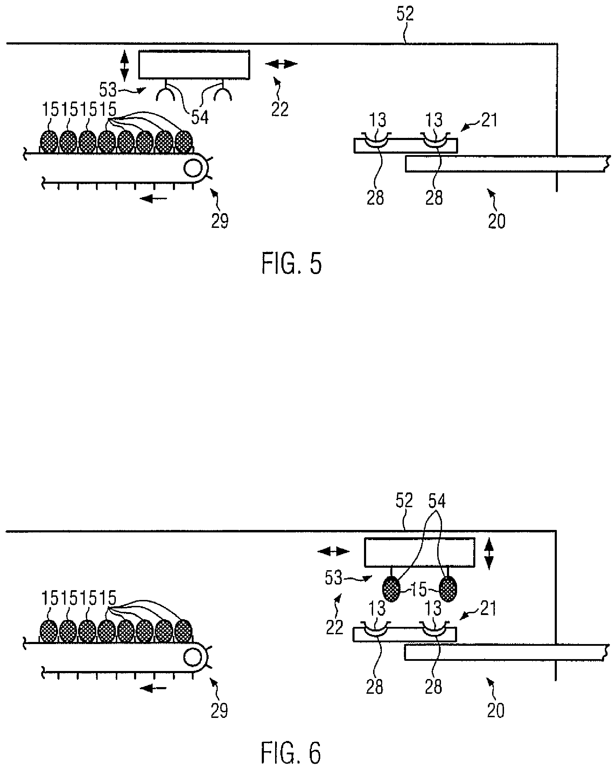

Fig. 5 zeigt die Bestückungsvorrichtung 22 mit der an einem Schienensystem 52 geführten Lebensmittelaufnahmevorrichtung 53. Das Schienensystem 52 der Vorrichtung überspannt hierbei Teile der Lebensmittelproduktzuführvorrichtung 29 in Form eines Förderbandes sowie die Neun-Uhr Position des Takttisches 20. Die Lebensmittelaufnahmevorrichtung 53 ist in der Vertikalen sowie in der Horizontalen geführt an dem Schienensystem 52 beweglich angeordnet. Die Lebensmittelaufnahmevorrichtung 53 umfasst zwei konkave Saugvorrichtungen 54, welche Lebensmittelprodukte 15 aufnehmen und in die zwei dargestellten Folienhalbschalen 13 der in der Neun-Uhr-Position des Takttisches 20 befindlichen Haltevorrichtung 21 legen können.

Fig. 6 zeigt die Bestückungsvorrichtung 22 wie die Lebensmittelaufnahmevorrichtung 53 zwei Lebensmittelprodukte aufgenommen und in eine Position oberhalb der Folienhalbschalen 13 bewegt hat.

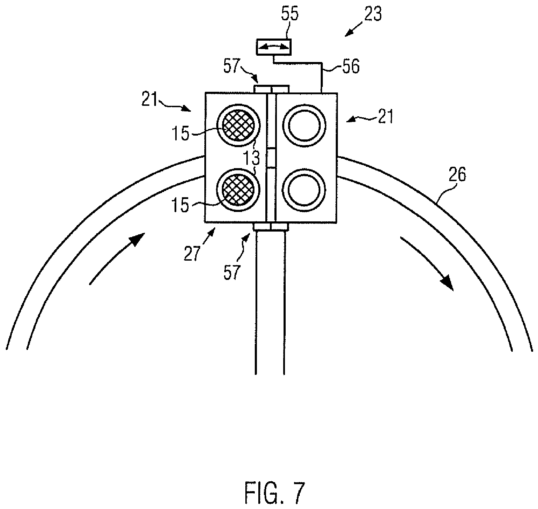

Die Klappeinheit 23 in Fig. 7 umfasst einen steuerbaren Antrieb 55 mit einem rotierbaren, S-förmigen Schwenkarm 56, welcher selektiv mit der die unbestückten Folienhalbschalen 13 aufweisenden Haltevorrichtung 21 koppelt und diese durch eine gesteuerte Rotation des Schwenkarms 56 sowohl in eine Klappposition als auch in die in dieser Figur gezeigte Ausgangsposition überführen kann.

Die Haltevorrichtungen 21 der Haltevorrichtungspaare 27, welche jeweils im Uhrzeigersinn nachgestellt angeordnet sind, sind mit dem Takttisch 20 fest verbunden. Die jeweils entsprechend anderen Haltevorrichtungen 21 sind zum Takttisch 20 beweglich angeordnet. Die beiden Haltevorrichtungen 21 eines Paares 27 sind über einen Klappmechanismus 57 hier in Form von zwei Scharnieren miteinander verbunden.

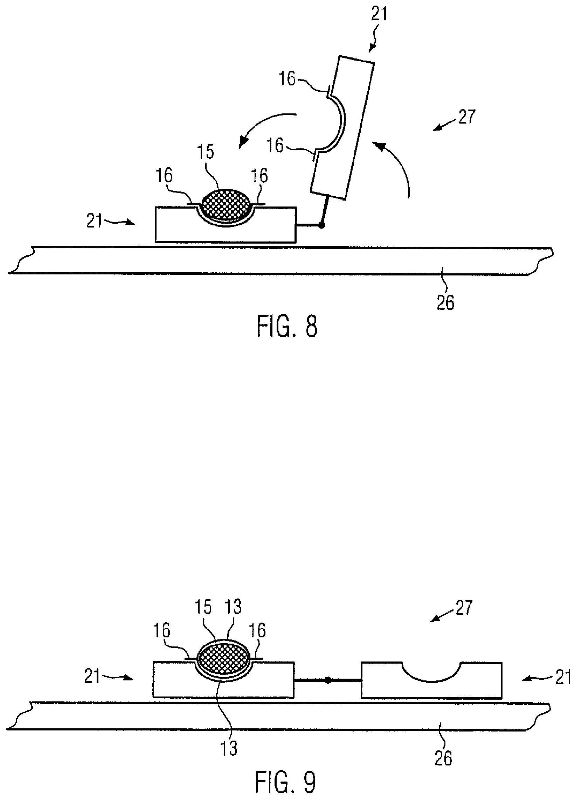

Der Schwenkarm 56 der Klappeinheit 23 greift bei dem sich in der Zwölf-Uhr Position befindlichen Haltevorrichtungspaar 27 unter die bewegliche Haltevorrichtung 21 und koppelt mit dieser selektiv. Eine gesteuerte rotierende Bewegung des S-förmigen Schwenkarms 56 klappt hierbei die sonst nahezu in einer Ebene liegenden Haltevorrichtungen 21 so aufeinander, dass die bewegliche Haltevorrichtung 21 bis zu einem gewissen Winkel über den Klappmechanismus 57 auf die entsprechende andere Haltevorrichtung 21 geklappt wird. Hierbei müssen sich die beiden Haltevorrichtungen 21 nicht berühren, da die Folienhalbschalen 13 der beweglichen Haltevorrichtung 21 durch die hervorstehenden Lebensmittelprodukte 15 auf die korrekte Position geführt werden. Wie in den Fig. 8 und 9 gut zu sehen ist, liegen nach einem Klappvorgang durch die Klappeinheit 23 die Flansche 16 der beiden Folienhalbschalen 13 bündig und fluchtend aufeinander auf. Das präzise Fluchten der aufeinanderliegenden Folienhalbschalenflansche 16 macht ein weiteres Nachschneiden der Flansche 16 (Konturnachschneiden) überflüssig.

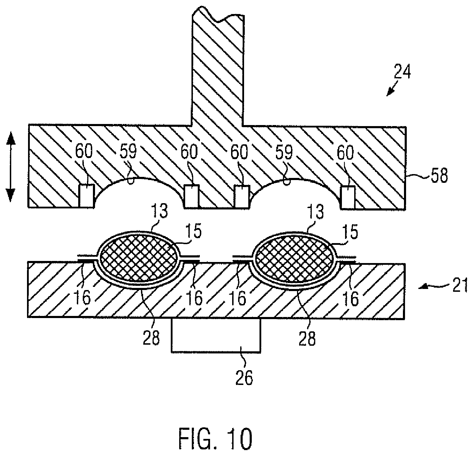

Fig. 10 zeigt die Fügevorrichtung 24 mit einem vertikal beweglichen Oberstempel 58, sowie einer in der Drei-Uhr-Position des Takttischs 20 befindlichen Haltevorrichtung 21, in welcher jeweils zwei Folienhalbschalen 13 mit ihren Flanschen 16 bündig und fluchtend aufeinanderliegen, so dass das Lebensmittelprodukt 15 zwischen und von ihnen umschlossen ist. Der Oberstempel 58 weist hierbei jeweils der Außenkontur der geformten Folienhalbschalen 13 entsprechende Aussparungen 59 auf. Die Aussparungen 59 werden jeweils an ihrern Rändern von ringförmigen Heizelementen 60 umfasst, welche entsprechend der Folienhalbschalenflansche 16 angeordnet sind. Beim Fügen wird der Oberstempel 58 vertikal nach unten gegen die Haltevorrichtung 21 gedrückt, bis die Folienhalbschalenflansche 16 zwischen dem Oberstempel 58 und der Haltevorrichtung 21 gepresst sind. Anschließend werden die Heizelemente 60 erhitzt bis die siegelbare Schicht die Flansche 16 miteinander verklebt bzw. das Lebensmittelprodukt 15 hermetisch versiegelt sind.

Fig. 11 zeigt die schematische Querschnittsansicht eines Lebensmittelprodukts 15 in Form einer Schokohohlfigur eingehaust zwischen zwei zusammengefügten Folienhalbschalen 13. Die versiegelten Flansche 16 stehen hierbei saturnringartig in der Äquatorialebene des hier eigehausten, symmetrischen Schokoladeneies 15 ab.

Fig. 12 zeigt eine andere Schokohohlfigur 15 mit einem asymmetrischen Profil. In einem solchen Falle werden in der Stempelvorrichtung 11 entsprechend zwei unterschiedliche Folienhalbschalenformen 13 geformt. Entsprechend sind die Aussparungen 59 für die Folienhalbschalen 13 in den Haltevorrichtungen 21 an die unterschiedlichen Halbschalenprofile entsprechend angepasst.

Es wird darauf hingewiesen, dass das hier beschriebene Verfahren und die hier beschriebene Maschine 1 für jede Anzahl von Folienhalbschalen 13, welche ein Vielfaches von Zwei darstellt, geeignet und somit hier offenbart ist.

Zur besseren Veranschaulichung wird ein erfindungsgemäßes Verfahren zum Verpacken eines Lebensmittelprodukts 15 mithilfe einer in den Figuren gezeigten Maschine 1 im Folgenden kurz erläutert.

Das Folienband 6 wird diskontinuierlich vom Foliencoil 2 abgezogen, in der Vorschneidestation 7 in vier Folienteilstücke 10 zerschnitten, welche anschließend in die Stempelvorrichtung 11 befördert werden.

In der Stempelvorrichtung 11 werden die Folienteilstücke 10 durch eine Senkbewegung der Stempelvorrichtung 11 in Richtung der Formmatrizen 12 geformt. Hierbei kommt jeweils zuerst die formgebende Struktur 36 mit dem Folienstück 10 in Kontakt, und drückt dieses in die Formmatrize 12. Hierbei werden die Folienhalbschalen 13 samt Flansch 16 jeweils durch die formgebende Struktur 36 sowie durch Teile des Gleitabschnitts 35 geformt.

Sobald das Folienstück 10 in der Formmatrize 12 bündig anliegt und sich die formgebende Struktur 36 entsprechend nicht weiter mit der sich nach unten senkenden Stempelvorrichtung 11 mitbewegen kann, federt die formgebende Struktur 36 ein, wodurch es zu einer Relativbewegung der formgebenden Struktur 36 zur Schnittvorrichtung 34 kommt, welche sich noch weiter mit der Stempelvorrichtung 11 in Richtung der Formmatrize 12 bewegt und über die Schnittaussparungen 40 ragende Überstände des Folienflansches 16 durch ein Einfahren in die Aussparungen 40 abschneidet. Diese abgeschnittenen Überstände werden gleichzeitig durch die Absaugvorrichtung 43 abgesaugt.

Anschließend fährt die Stempelvorrichtung 11 wieder nach oben und die geformten und final beschnittenen Folienhalbschalen 13 können von dem 3D-Formsauger 45 aufgenommen und in die Wartevorrichtung 17 befördert und abgelegt werden.

In der Wartevorrichtung 17 nehmen die konvexen Sauger 49 der Greifvorrichtung 47 der Transfereinheit 30 die geformten Folienhalbschalen 13 auf und befördern sie in eine leere Haltevorrichtung 21 wartend in der Sechs-Uhr-Position des Takttischs 20. Nahezu gleichzeitig zum Aufnehmen der Folienhalbschalen 13 in der Wartevorrichtung 17 nehmen die konkaven Sauger 50 der anderen Greifvorrichtung 48 in der Sechs-Uhr-Position des Takttischs 20 wartende, fertig zusammengefügte Folienhalbschalen 13 auf und befördern sie zur Produktabführvorrichtung 31.

Anschließend dreht der Takttisch 20 um 45° weiter und befördert die in die Haltevorrichtungen 21 eingebrachten vier Folienhalbschalen 13 von der Sechs-Uhr-Position zur Neun-Uhr-Position. In der Neun-Uhr-Position werden die in der feststehenden Haltevorrichtung 21 befindlichen Folienhalbschalen 13 jeweils mit einem Lebensmittelprodukt 15 bestückt.

Anschließend fährt der Takttisch 20 eine weitere Viertelumdrehung weiter bis zur Zwölf-Uhr-Position. An der Zwölf-Uhr-Position wird die lose Haltevorrichtung 21 auf die feststehende Haltevorrichtung 21 geklappt. Hierbei wird die lose Haltevorrichtung 21 durch die Klappeinheit 23 mit ihrem Schwenkarm 56 so schnell in die klappende Position befördert, dass die Folienhalbschalen 13 durch die Beschleunigung und den Luftwiderstand so lange in der sich bewegenden Haltevorrichtung 21 verbleiben, bis diese bis zu ihrer Endposition gegenüber der festen Haltevorrichtung 21 geklappt ist. Die Folienhalbschalen 13 werden hierbei auf die Oberseite des entsprechenden Lebensmittelprodukts 15 mit der darunterliegenden Folienhalbschale 13 gesetzt und durch die Oberseite des hervorstehenden Lebensmittelprodukts 15 entsprechend zentriert. Nach dem Klappen wird die nun leere bewegliche Haltevorrichtung 21 durch die Klappeinheit 23 wieder in ihre Ausgangsposition zurückbewegt und der Schwenkarm 56 von der beweglichen Haltevorrichtung 21 entkoppelt.

Anschließend dreht der Takttisch 20 eine Viertelumdrehung weiter und überführt die nun aufeinanderliegenden Folienhalbschalen 13 samt dem innenliegenden Lebensmittelprodukt 15 in die Fügevorrichtung 24. In der Fügevorrichtung 24 fährt der Oberstempel 58 nach unten und presst die aufeinanderliegenden Flansche 16 der Folienhalbschalen 13 zusammen und siegelt diese durch den Einsatz von Hitze in den Heizelementen 60.

Anschließend fährt der Oberstempel 58 wieder nach oben und der Takttisch 20 dreht eine Viertelumdrehung (45°) weiter, wieder in die anfängliche Sechs-Uhr-Position. Die beiden Greifvorrichtungen 47, 48 der Transfereinheit 30 befinden sich zu diesem Zeitpunkt wieder oberhalb der Wartevorrichtung 17 und der Sechs-Uhr-Position des Takttischs 20, so dass die konvexen Greifer 49 Folienhalbschalen 13 von der Wartevorrichtung 17 aufnehmen können und die konkaven Greifer 5 gleichzeitig die zusammengefügten Folienhalbschalen 13/das Endprodukt 3 aus der Sechs-Uhr-Position aufnehmen und zur Produktabführvorrichtung 31 transportieren können.

Die zuvor beschriebenen Vorgänge in der jeweiligen Sechs-, Neun-, Zwölf-, und Drei-Uhr-Position des Takttischs 20 können entsprechend gleichzeitig ablaufen, d. h. beispielsweise dass während in der Sechs-Uhr-Position zusammengefügte Folienhalbschalen 13/ das Endprodukt 3 entnommen und einzelne Folienhalbschalen 13 eingelegt werden, in der Neun-Uhr-Position eine Bestückung mit einem Lebensmittelprodukt 15 stattfindet, in der Zwölf-Uhr-Position ein Klappen stattfindet und in der Drei-Uhr-Position ein Zusammenfügen von Folienhalbschalen 13 stattfindet.

## Patentansprüche

1. Verfahren zum Verpacken eines Lebensmittelprodukts (15), insbesondere einer Schokohohlfigur, wobei
jeweils eine von zwei Folienhalbschalen (13) mit einem Lebensmittelprodukt (15) mit einer Außenkontur bestückt wird, und hierbei jede Folienhalbschale (13) mit ihrer jeweiligen Innenkontur an die entsprechende Außenkontur des Lebensmittelproduktes (15) angepasst ist, und
eine mit dem Lebensmittelprodukt (15) bestückte Folienhalbschale (13) mit einer entsprechend anderen Folienhalbschale (13) zusammengefügt wird, so dass die beiden zusammengefügten Folienhalbschalen (13) das Lebensmittelprodukt (15) einhausen,
**dadurch gekennzeichnet, dass**
die Folienhalbschalen (13) vor dem Bestücken beschnitten werden.

2. Verfahren nach Anspruch 1, wobei eine Folienhalbschale (13) durch eine Senkbewegung einer Stempelvorrichtung (11) geformt und zudem von dieser Stempelvorrichtung (11) beschnitten wird, vorzugsweise wird eine Folienhalbschale (13) von der Stempelvorrichtung (11) beschnitten, während sie von der Stempelvorrichtung (11) fixiert wird.

3. Verfahren nach einem der vorherigen Ansprüche, wobei eine Folienhalbschale (13) in einem Bearbeitungsgang geformt, fixiert und beschnitten wird.

4. Verfahren nach einem der vorherigen Ansprüche, wobei vor dem Zusammenfügen der geschnittenen Folienhalbschalen jeweils eine unbestückte Folienhalbschale auf eine bestückte Folienhalbschale gelegt, insbesondere geklappt, wird, so dass die beiden Folienhalbschalen das Lebensmittelprodukt umschließen.

5. Verfahren nach einem der vorherigen Ansprüche, wobei die Folienhalbschalen (13) in einem Beschneidebereich (11) beschnitten und in einem davon beabstandeten Lebensmittelverarbeitungsbereich (19) bestückt und zusammengefügt werden, vorzugsweise werden geschnittene Folienhalbschalen (13) bei einer Arbeitsposition in den Lebensmittelverarbeitungsbereich (19) überführt, von der auch zusammengefügte Folienhalbschalen (13) aus dem Lebensmittelverarbeitungsbereich (19) abgeführt werden.

6. Maschine (1) zum Verpacken eines Lebensmittelprodukts (15), insbesondere einer Schokohohlfigur, mit
einer Beschneideeinheit (33) zum Beschneiden von unbestückten Folienhalbschalen (13), und
einer Lebensmittelverarbeitungseinheit (19), welche eine Bestückungsvorrichtung (22) zum Bestücken von Folienhalbschalen (13) mit Lebensmittelprodukten (15), die jeweils eine Außenkontur aufweisen, und eine Fügevorrichtung (24) zum Zusammenfügen von mit Lebensmittelprodukten (15) bestückten Folienhalbschalen (13) und unbestückten Folienhalbschalen (13), so dass die beiden zusammengefügten Folienhalbschalen (13) ein Lebensmittelprodukt (15) einhausen, aufweist, **dadurch gekennzeichnet, dass**
die Beschneideeinheit (33) außerhalb der Lebensmittelverarbeitungseinheit (19) angeordnet ist.

7. Maschine (1) nach Anspruch 6, wobei die Maschine (1) eine Formeinheit (32) zum Formen von Folienstücken (10) in Folienhalbschalen (13) aufweist, und die Formeinheit (32) und die Beschneideeinheit (33) in ein und derselben Arbeitsstation angeordnet sind.

8. Maschine (1) nach Anspruch 7, wobei die Formeinheit (32) und die Beschneideeinheit (33) in einer Stempelvorrichtung (11) angeordnet sind.

9. Maschine nach Anspruch 7 oder 8, wobei
die Formeinheit (32) eine formgebende Struktur (36) zum drückenden Formen einer Folienhalbschale (13) aufweist, und
die Beschneideeinheit (33) eine Schnittvorrichtung (34) aufweist, welche in der Arbeitsstation und/oder in der Stempelvorrichtung (11) zur formgebenden Struktur (36) relativ beweglich angeordnet ist.

10. Maschine (1) nach Anspruch 9, wobei
die formgebende Struktur (36) zur Schnittvorrichtung (34) derart relativ beweglich angeordnet ist, dass ein drückendes Formen einer Folienhalbschale (13) eine Relativbewegung der Schnittvorrichtung (34) zur formgebenden Struktur (36) in Richtung der Folienhalbschale (13) bewirkt und/oder zulässt.

11. Maschine (1) nach Anspruch 10, wobei die formgebende Struktur (36) in der Stempelvorrichtung (11) federnd angeordnet ist und zur Schnittvorrichtung (34) in Drückrichtung vorauseilend angeordnet ist, so dass bei einem drückenden Formen einer Folienhalbschale (13) ein Einfedern der formgebenden Struktur (36) die Relativbewegung der Schnittvorrichtung (34) in Richtung der Folienhalbschale (13) bewirkt und/oder zulässt.

12. Maschine (1) nach einem der Ansprüche 6 bis 11, wobei die Lebensmittelverarbeitungseinheit (19) Haltevorrichtungen (21) zum Halten von Folienhalbschalen (13) aufweist, welche im Betrieb der Maschine (1) diskontinuierlich, vorzugsweise auf einem Takttisch (20), durch die Lebensmittelverarbeitungseinheit (19) bewegt werden, und
wobei jeweils zwei Haltevorrichtungen (21) zueinander relativ beweglich angeordnet sind und im Betrieb in einem ersten Zustand Folienhalbschalen (13) halten und in einem zweiten Zustand eine Haltevorrichtung (21) ihre Folienhalbschalen (13) auf die Folienhalbschalen (13) der entsprechend andere Haltevorrichtung (21) gelegt hat, so dass die beiden Folienhalbschalen (13) das Lebensmittelprodukt (15) umschließen.

13. Maschine (1) nach Anspruch 12, wobei jeweils zwei Haltevorrichtungen (21) über einen Klappmechanismus (57) miteinander verbunden sind, und die Lebensmittelverarbeitungseinheit (19) weiterhin eine Klappeinheit (23) aufweist, welche im Betrieb den Klappmechanismus (57) betätigt.

14. Maschine (1) nach einem der Ansprüche 6 bis 13, wobei die Maschine (1) eine Transfereinheit (30) aufweist, welche dazu eingerichtet ist, im Betrieb geschnittene Folienhalbschalen (13) aufzunehmen und in der Lebensmittelverarbeitungseinheit (19) abzulegen und zeitlich überschneidend, vorzugsweise gleichzeitig, zusammengefügte Folienhalbschalen (13) aus der Lebensmittelverarbeitungseinheit (19) aufzunehmen und abzuführen.

15. Maschine (1) nach Anspruch 14, wobei die Transfereinheit (30) zwei bewegliche und zueinander beabstandete, insbesondere zueinander konstant beabstandete, selektive Greifvorrichtungen (47, 48) aufweist, wobei die eine Greifvorrichtung (47) Folienhalbschalen (13) selektiv aufnehmen und abgeben kann, und die andere Greifvorrichtung (48) zusammengefügte Folienhalbschalen (13, 3) selektiv aufnehmen und abgeben kann.

## Claims

1. A method for packaging a food product (15), in particular a hollow chocolate figure, wherein
one of every two foil half-shells (13) is loaded with a food product (15) having an outer contour,
and in which the respective inner contour of each foil half-shell (13) is adapted to the corresponding outer contour of the food product (15), and
a foil half-shell (13) loaded with the food product (15) is joined together with another corresponding foil half-shell (13) so that the two joined foil half-shells (13) enclose the food product (15),
**characterized in that**
the foil half-shells (13) are trimmed before being loaded.

2. The method as claimed in claim 1, wherein a foil half-shell (13) is formed by a lowering movement of a punch device (11) and in addition is trimmed by said punch device (11), and preferably a foil half-shell (13) is trimmed by the punch device (11) while it is fixed by the punch device (11).

3. The method as claimed in one of the preceding claims, wherein a foil half-shell (13) is formed, fixed and trimmed in a single phase of the operation.

4. The method as claimed in one of the preceding claims wherein, before the trimmed foil half-shells are joined together, an unloaded foil half-shell is placed, in particular turned, onto a loaded foil half-shell, so that the two foil half-shells enclose the food product.

5. The method as claimed in one of the preceding claims, wherein the foil half-shells (13) are trimmed in a trimming zone (11) and are loaded and joined together in a food processing zone (19) which is separated therefrom, and preferably, trimmed foil half-shells (13) are transferred into the food processing zone (19) in a working position from which joined foil half-shells (13) are also removed from the food processing zone (19).

6. A machine (1) for packaging a food product (15), in particular a hollow chocolate figure, having
a trimming unit (33) for trimming unloaded foil half-shells (13), and
a food processing unit (19) which has a loading device (22) for loading foil half-shells (13) with food products (15) which each have an outer contour, and a joining device (24) for joining together foil half-shells (13) loaded with food products (15) and unloaded foil half-shells (13), so that the two joined foil half-shells (13) enclose a food product (15),
**characterized in that**
the trimming unit (33) is disposed outside the food processing unit (19).

7. The machine (1) as claimed in claim 6, wherein the machine (1) has a forming unit (32) for forming foil pieces (10) into foil half-shells (13), and the forming unit (32) and the trimming unit (33) are disposed in one and the same work station.

8. The machine (1) as claimed in claim 7, wherein the forming unit (32) and the trimming unit (33) are disposed in a punch device (11).

9. The machine (1) as claimed in claim 7 or claim 8, wherein
the forming unit (32) has a shaping structure (36) for compressingly forming a foil half-shell (13), and
the trimming unit (33) has a cutting device (34) which is disposed in the work station and/or in the punch device (11) so as to be relatively movable with respect to the shaping structure (36).

10. The machine (1) as claimed in claim 9, wherein
the shaping structure (36) is disposed to be relatively movable with respect to the cutting device (34) in a manner such that compressive forming of a foil half-shell (13) causes and/or permits a relative movement of the cutting device (34) with respect to the shaping structure (36) in the direction of the foil half-shell (13).

11. The machine (1) as claimed in claim 10, wherein the shaping structure (36) is resiliently disposed in the punch device (11) and is disposed in a position which leads the cutting device (34) in the pressing direction in a manner such that when a foil half-shell (13) is formed by pressing, a deflection of the shaping structure (36) causes and/or permits the relative movement of the cutting device (34) in the direction of the foil half-shell (13).

12. The machine (1) as claimed in one of claims 6 to 11, wherein the food processing unit (19) comprises holding devices (21) for holding foil half-shells (13) which are moved discontinuously through the food processing unit (19) during operation of the machine (1), preferably on an indexing table (20), and
wherein two holding devices (21) are each disposed so as to be relatively movable with respect to one another and during operation, in a first state, hold foil half-shells (13) and in a second state, a holding device (21) has deposited its foil half-shells (13) on the foil half-shells (13) of the corresponding other holding device (21) in a manner such that the two foil half-shells (13) enclose the food product (15).

13. The machine (1) as claimed in claim 12, wherein two holding devices (21) are each connected to each other by a folding mechanism (57), and the food processing unit (19) furthermore has a folding unit (23) which actuates the folding mechanism (57) during operation.

14. The machine (1) as claimed in one of claims 6 to 13, wherein the machine (1) has a transfer unit (30) which is configured to receive foil half-shells (13) which have been trimmed during operation and to deposit them in the food processing unit (19) and, overlapping in time, preferably simultaneously, to receive and discharge joined foil half-shells (13) from the food processing unit (19).

15. The machine (1) as claimed in claim 14, wherein the transfer unit (30) has two movable selective gripping devices (47, 48) which are spaced apart from one another, in particular are spaced apart from one another by a constant distance, wherein one gripping device (47) can selectively receive and discharge foil half-shells (13), and the other gripping device (48) can selectively receive and discharge foil half-shells which have been joined together (13, 3).

## Revendications

1. Procédé d'emballage d'un produit alimentaire (15), en particulier d'une figure creuse en chocolat, dans lequel
respectivement une parmi deux demi-coques de film (13) est garnie avec un produit alimentaire (15) présentant un contour extérieur,
et le contour intérieur respectif de chaque demi-coque de film (13) est en outre adapté au contour extérieur correspondant du produit alimentaire (15), et
une demi-coque de film (13) garnie avec le produit alimentaire (15) est réunie à une autre demi-coque de film (13) correspondante de sorte que les deux demi-coques de film (13) réunies hébergent le produit alimentaire (15),
**caractérisé en ce que**
les demi-coques de film (13) sont découpées avant l'étape de garniture.

2. Procédé selon la revendication 1, dans lequel une demi-coque de film (13) est formée grâce à un mouvement d'abaissement d'un dispositif d'estampage (11) et est en outre découpée par ledit dispositif d'estampage (11), une demi-coque de film (13) étant de manière préférée découpée par le dispositif d'estampage (11) pendant qu'elle est immobilisée par le dispositif d'estampage (11).

3. Procédé selon l'une quelconque des revendications précédentes, dans lequel une demi-coque de film (13) est formée, immobilisée et découpée en une seule étape de traitement.

4. Procédé selon l'une quelconque des revendications précédentes, dans lequel, avant la réunion des demi-coques de film découpées, respectivement une demi-coque de film non garnie est placée, en particulier rabattue, sur une demi-coque de film garnie de sorte que les deux demi-coques de film enferment le produit alimentaire.

5. Procédé selon l'une quelconque des revendications précédentes, dans lequel les demi-coques de film (13) sont découpées dans une région de découpe (11) et sont garnies et réunies dans une région de traitement des aliments (19) située à distance de ladite région de découpe, des demi-coques de film (13) découpées étant de manière préférée placées dans la région de traitement des aliments (19) dans une position de travail à partir de laquelle des demi-coques de film (13) réunies sont également retirées de la région de traitement des aliments (19).

6. Machine (1) permettant d'emballer un produit alimentaire (15), en particulier une figurine creuse en chocolat, avec
une unité de découpe (33) permettant de découper des demi-coques de film (13) non garnies, et
une unité de traitement des aliments (19) présentant un dispositif de garniture (22) permettant de garnir des demi-coques de film (13) avec des produits alimentaires (15) présentant respectivement un contour extérieur, et un dispositif de réunion (24) permettant de réunir des demi-coques de film (13) garnies de produits alimentaires (15) et des demi-coques de film (13) non garnies de produits alimentaires, de sorte que les deux demi-coques de film (13) réunies hébergent un produit alimentaire (15),
**caractérisée en ce que**
l'unité de découpe (33) est agencée à l'extérieur de l'unité de traitement des aliments (19).

7. Machine (1) selon la revendication 6, dans laquelle la machine (1) présente une unité de formage (32) permettant de former des pièces de film (10) pour en faire des demi-coques de film (13), et l'unité de formage (32) et l'unité de découpe (33) sont agencées dans un seul et même poste de travail.

8. Machine (1) selon la revendication 7, dans laquelle l'unité de formage (32) et l'unité de découpe (33) sont agencées dans un dispositif d'estampage (11).

9. Machine selon la revendication 7 ou 8, dans laquelle
l'unité de formage (32) présente une structure dispensatrice de forme (36) permettant un formage à la presse d'une demi-coque de film (13), et
l'unité de découpe (33) présente un dispositif de coupe (34) agencé dans le poste de travail et/ou dans le dispositif d'estampage (11) de manière à pouvoir se déplacer par rapport à la structure dispensatrice de forme (36).

10. Machine (1) selon la revendication 9, dans laquelle
la structure dispensatrice de forme (36) est agencée de manière à pouvoir se déplacer par rapport au dispositif de coupe (34) de telle manière qu'un formage à la presse d'une demi-coque de film (13) provoque et/ou permet un déplacement relatif du dispositif de coupe (34) par rapport à la structure dispensatrice de forme (36) en direction de la demi-coque de film (13).

11. Machine (1) selon la revendication 10, dans laquelle la structure dispensatrice de forme (36) est agencée de manière élastique dans le dispositif d'estampage (11) et est agencée de manière à précéder le dispositif de coupe (34) dans la direction de pression, de sorte que le déplacement relatif du dispositif de coupe (34) en direction de la demi-coque de film (13) lors d'un formage à la presse d'une demi-coque de film (13) provoque et/ou permet de dévier la structure dispensatrice de forme (36).

12. Machine (1) selon l'une quelconque des revendications 6 à 11, dans laquelle l'unité de traitement des aliments (19) présente des dispositifs de maintien (21) permettant de maintenir des demi-coques de film (13) qui sont déplacées de manière discontinue par l'unité de traitement des aliments (19) pendant le fonctionnement de la machine (1), de manière préférée sur une table d'indexation (20), et
dans laquelle respectivement deux dispositifs de maintien (21) sont agencés de manière à pouvoir se déplacer l'un par rapport à l'autre et, en cours de fonctionnement dans un premier état, maintiennent les demi-coques de film (13) et, dans un second état, un dispositif de maintien (21) place ses demi-coques de film (13) sur les demi-coques de film (13) de l'autre dispositif de maintien (21) correspondant de sorte que les deux demi-coques de film (13) enferment le produit alimentaire (15).

13. Machine (1) selon la revendication 12, dans laquelle deux dispositifs de maintien (21) sont reliés l'un à l'autre par l'intermédiaire d'un mécanisme de rabattage (57), et l'unité de traitement des aliments (19) présente en outre une unité de rabattage (23) dont le fonctionnement actionne le mécanisme de rabattage (57).

14. Machine (1) selon l'une quelconque des revendications 6 à 13, dans laquelle la machine (1) présente une unité de transfert (30) conçue pour recevoir pendant son fonctionnement des demi-coques de film (13) découpées et les stocker dans l'unité de traitement des aliments (19) et accueillir et retirer des demi-coques de film (13) issues de l'unité de traitement des aliments (19) et réunies de manière temporellement coïncidente, de manière préférée simultanément.

15. Machine (1) selon la revendication 14, dans laquelle l'unité de transfert (30) présente deux dispositifs de préhension (47, 48) sélectifs, mobiles et mutuellement espacés, en particulier espacés les uns des autres de manière constante, dans laquelle le dispositif de préhension (47) peut recevoir et distribuer de manière sélective des demi-coques de film (13), et l'autre dispositif de préhension (48) peut recevoir et distribuer de manière sélective des demi-coques de film (13, 3) réunies.
